Europäisches Patentamt

(19) European Patent Office

Office européen des brevets

(11) Publication number: **0 120 366**
**B1**

(12) **EUROPEAN PATENT SPECIFICATION**

(45) Date of publication of patent specification: **17.11.88**

(21) Application number: **84102482.1**

(22) Date of filing: **08.03.84**

(51) Int. Cl.⁴: **G 02 B 6/24,** G 02 B 6/34

(54) **An optical component for use in fiber optic communication systems.**

(30) Priority: **28.03.83 US 479489**

(43) Date of publication of application:
**03.10.84 Bulletin 84/40**

(45) Publication of the grant of the patent:
**17.11.88 Bulletin 88/46**

(84) Designated Contracting States:
**AT CH DE FR GB IT LI NL**

(56) References cited:
**US-A-4 111 524**
**US-A-4 274 706**
**US-A-4 337 993**
**US-A-4 359 259**
**US-A-4 387 955**

**SOVIET JOURNAL OF QUANTUM
ELECTRONICS, vol. 13, no. 2, February 1983,
pages 125-138, American Institute of Physics,
New York, US; E.M. DIANOV et al.:**
**"Wavelength-division multiplexing of channels
in fiber-optic communication lines (review)"**
**NAVY TECHNICAL DISCLOSURE BULLETIN,
vol. 6, no. 2, February 1981, pages 21-26; R.A.
FERRANTE et al.: "Diffractive fiber optic
demultiplexer"**

(73) Proprietor: **POLAROID CORPORATION**
**549 Technology Square**
**Cambridge, Massachusetts 02139 (US)**

(72) Inventor: **Plummer, William T.**
**129 Arena Terrace**
**Concord Massachusetts, 01742 (US)**

(74) Representative: **Koch, Günther, Dipl.-Ing. et al**
**Kaufingerstrasse 8 Postfach 920**
**D-8000 München 2 (DE)**

Courier Press, Leamington Spa, England.

## Description

This invention in general relates to fiber optic communication systems and in particular to an apparatus and a method for optically coupling predetermined combinations of a plurality of optical fibers each of which can carry information signals in the form of one or more modulated electromagnetic waves of preassigned wavelength.

The transmission of information along optical fibers in the form of modulated electromagnetic waves of frequencies of 100 000 GHz or higher is a well-established practice which is becoming of increasing importance in the communications industry.

One of the reasons why optical fibers have become so attractive as a transmission medium in communications networks is because of their capacity to handle large amounts of information compared with other more conventional mediums of equivalent size. However, optical fibers are not without practical problems many of which still require solutions before the benefits of optical fiber communication systems can be fully realized and the capacities of such systems fully exploited in large scale.

Many of the problems associated with optical fibers are related to their hair-like size, particularly single mode, which makes it extremely difficult to connect them one to another and to other larger components with which they must necessarily interface. For example, tapping a single fiber optic link to allow multiple access requires proper couplers which are easy to use in the field. Also, combining modulated signals from multiple light sources onto a single fiber to increase effective data rates and to permit communication between a number of stations requires adequate multiplexers and demultiplexers.

In satisfying some of these requirements, those skilled in the art have made use of holographic techniques and holographic optical elements such as the multiplexer described in U.S. Patent No. 4,359,259.

Thus, it is known that the properties of holographic optical elements can be exploited in a useful way to solve some of the problems associated with fiber optic communication systems.

Holographic optical elements differ from conventional ones because they operate by diffraction rather than by refraction, as in the case of lenses and reflection as with mirrors. They are like diffraction gratings in that they may deflect light of different wavelengths at different angles but are free from the limitations of gratings because they can focus, defocus and collimate light as well, i.e., they have lens-like properties.

Another useful property of holograms is that, after proper processing, subsequent illumination by one of the wave fronts used in constructing them results in the reconstruction of the other wave.

The Soviet Journal of Quantum Electronics vol. 13, No. 2; February 83 (American Institute of Physics New York, USA) shows and describes on page 131 (Figure 11) a demultiplexer based on a planar waveguide with a concave diffraction grating and one input fiber waveguide and a plurality of output fiber waveguides. Also an embodiment is described wherein the demultiplexer comprises a concave holographic grating. An interference pattern was produced on a photoresist-coated concave disk by illuminating it with two point coherent sources (there sources were formed by an optical system after splitting an argon laser beam into two parts). The granting profile resulting after a suitable treatment of the photoresist was aluminium-coated. an input fiber waveguide was separated from the output fibers. The demultiplexer operated in the range 480—520 nm and the reciprocal dispersion was 5 nm/mm.

It is a primary object of the present invention to provide a holographic optical element for use in optically coupling a plurality of optical fibers in various predetermined combinations or permit signals to travel between the combinations in accordance with predesignated wavelengths associated with each combination. Said technical problem is solved in an apparatus for optically coupling optical fibers by the combined features of Claim 1. In this way an optical component can be provided for coupling a plurality of optical fibers in predetermined manner and to provide a multiplexer/demultiplexer for use with a plurality of optical fibers.

Developments and improvements results from depending claims 2 and 3. It is another object of the present invention to provide a method by which optical coupling components for use, with optical fibers can be fabricated.

This object can be realized by the combined features of method Claim 4.

The invention itself, however, both as to its organization and method of operation, together with other objects and advantages thereof will be best understood from the following description of the illustrated embodiments when read in connection with the accompanying drawings wherein like numbers have been employed in the different figures to denote the same parts and wherein:

Figure 1 is an enlarged vertical section of the optical component of the invention shown in combination with part of a fiber optic bundle having parts broken away;

Figure 1A is a sectional view taken along line 1A—1A in Figure 1;

Figure 2 is similar to Figure 1 and includes a diagrammatic illustration of the optical action of the invention on a coherent electromagnetic wave emerging from one optical fiber;

Figure 3 is similar to Figure 2 but illustrates the optical action on a coherent electromagnetic wave having a different wavelength than that shown in Figure 2;

Figure 4 is similar to Figures 2 and 3 and shows, in diagrammatic fashion, the propagation of a wavefront containing multiple wavelengths after emerging from a single optical fiber of the bundle;

Figure 5 is a diagrammatic view of an arrangement by which a part of the method of the invention is practiced;

Figure 6 is similar to Figure 5; and

Figures 7 and 8 diagrammatically illustrate an alternate arrangement for practicing an interferometric method of the invention.

Various practices have been developed in the communications industry to reduce the total amount of equipment necessary for conveying multiple messages between large numbers of information sources remotely located from one another. One common method for achieving this is referred to as multiplexing. Multiplexing involves combining messages from several different sources and then transmitting them as a composite group over a single transmission medium. The process of separating out the individual messages by receivers is known as demultiplexing and this is also a well-known practice.

There are two common forms of multiplexing and demultiplexing known as time division multiplexing and frequency division multiplexing. In time division multiplexing, messages from different sources share the single transmission medium but at different times. In frequency division multiplexing, all of the messages from the different sources are combined on carriers of different frequency or wavelength and these are simultaneously transmitted along the single transmission medium for separation later on the basis of the preassigned wavelength or frequency associated with each information source.

Wavelength division multiplexing is particularly adaptable for use with optical fiber communication systems because of the large number of channels or information sources which they can carry simultaneously. The present invention is particularly suitable for use with optical fiber systems in wavelength division multiplexing and demultiplexing. However, its use is not restricted to that function alone since it, as will be seen, can also be used for simple coupling purposes or for some combination of multiplexing and coupling.

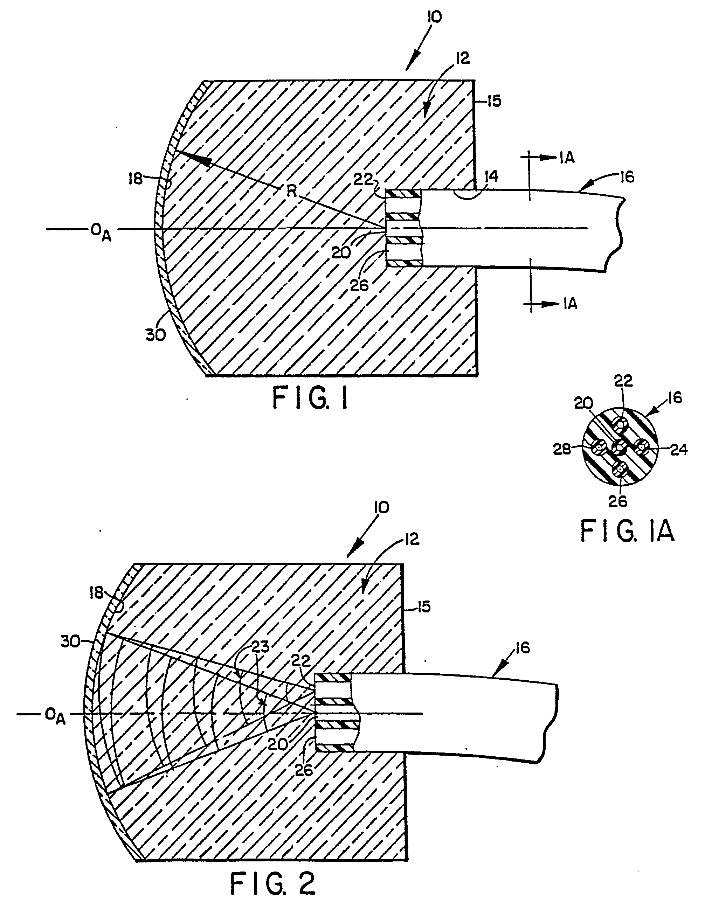

Referring now to Figure 1 there is shown the preferred embodiment of the invention and this is an optical component which is designated generally at 10. The optical component 10, which is shown in vertical section of Figure 1, is rotationally symmetric about a central axis, OA, extending longitudinally throughout its length. As can be seen in Figure 1, the optical component 10 comprises an optical element 12 which is preferably molded of a suitable optical plastic and which functions in a manner to be described hereinafter to provide both optical action and as a means for supporting a bundled cable of optical fibers.

For this latter purpose, the optical element 12 is provided with a recess, preferably cylindrical in shape, 14 in a rear surface 15 thereof. The recess 14 is preferably dimensioned to receive a plurality of optical fibers in the form of a bundled cable 16.

As shown in Figure 1A, the cable 16 includes five optical fibers, 20 through 28, although more may be present. The optical fibers, 20 through 28, are preferably single mode but may also be multimode fibers, and are arranged concentrically about the longitudinal axis of the cable 16 with the optical fiber 20 centrally located and the optical fibers 22 through 28 approximately concentric about the center of the core of the optical fiber 20. However, all of the fibers may in fact be randomly oriented and the invention, as will be seen, still can be practiced.

The recess 14 is preferably dimensioned so that when the cable 16 is inserted therein the core of the central optical fiber 20 is more or less precisely aligned along the optical axis, OA, of the optical component 10. At the interface between the end face of the optical fibers, 20 through 28, and the base of the recess 14, it is preferred to provide an index matching fluid in order to reduce any reflections. In addition, sufficient space is to be provided to allow the use of suitable adhesive to retain the cable 16 in the recess 14. This may be done in well-known manners through the use of suitable epoxy which may also be chosen to fulfill the index matching function.

The forward end of the optical element 12 is provided with a spherical surface 18 of radius R the center of curvature of which is located more or less precisely on the optical axis, OA, and at the forward face of the core of the central optical fiber 20.

The spherical surface 18, used in a manner to be described, need only be generally spherical or approximately spherical but may also be almost any shape including conical and planar. However, for reasons which will become apparent hereinafter, the spherical shape for the surface 18 is preferred.

Overlying the spherical surface 18 there is provided a holographic layer or layers 30 which have formed therein index of refraction variations in a manner to be subsequently described.

All of the optical fibers, 20 through 28, are capable of carrying information on one or more modulated electromagnetic waves of different wavelength with the wavelengths preassigned in such a way that each one corresponds to a particular information source or channel. However, the optical fiber 20, centrally located on the optical axis, OA, is arbitrarily designated as a primary or master transmission fiber along which several channels of information are transmitted and are to be separated out into the remaining fibers on a wavelength basis by the optical component 10 or, alternatively, information from individual channels travelling along the optical fibers 22 through 28 on preassigned wavelengths associated with each are intended to be combined by the optical component 10 for transmission along the central optical fiber 20.

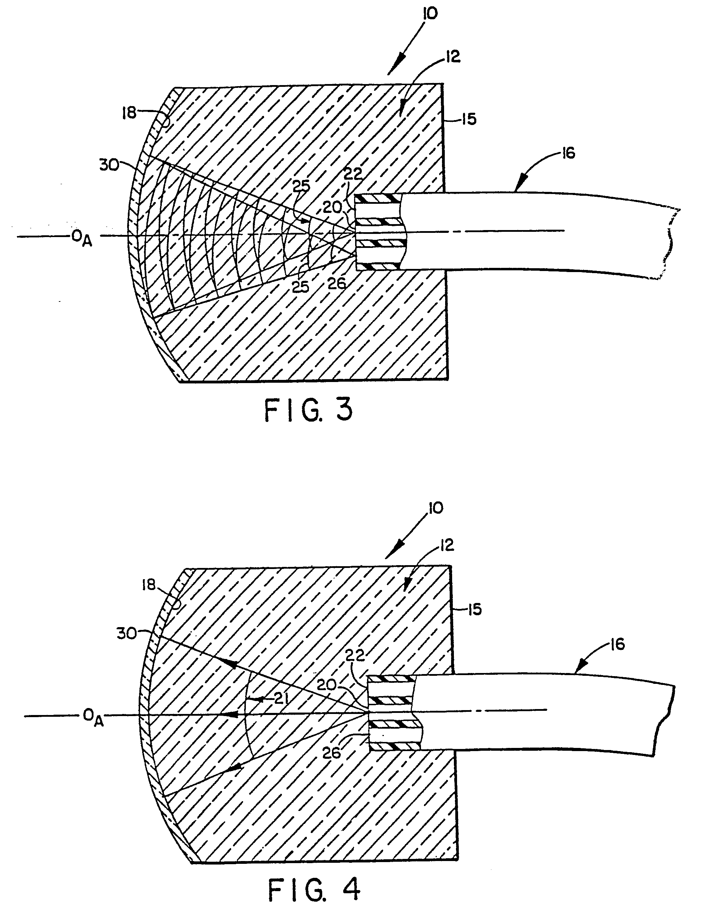

The manner in which the optical component 10 operates to accomplish these purposes may best be understood by now referring to Figures 2, 3 and 4. In Figure 4, there is shown emerging from the central optical fiber 20 a multiplexed signal emerging as a wave front 21 and containing a plurality of channels each operating at a different preassigned wavelength. The light emerging from the end of the optical fiber 20 is from spatially and temporally coherent sources, such as lasers, and as such is shown as a propagating spherical wave front or wave fronts which gradually expand in a known way in accordance with the numerical aperture of the optical fiber 20 until they strike the spherical surface 18 and holographic layer 30.

Figure 2 illustrates the action of the optical component 10 on one wavelength channel designated generally as the wave front 23 emerging from the optical fiber 20. Here, it can be seen that the spherical surface 18 and holographic layer 30 in combination redirect the wave front 23, which has a particular preassigned wavelength, from the optical fiber 20 into the optical fiber 22 for further transmission along the fiber 22 to its ultimate destination. However, it is also to be understood that the spherical surface 18 and the holographic layer 30 can also operate to redirect information on the preassigned wavelength associated with the optical fiber 22 into the end of the optical fiber 20 after it has emerged from the optical fiber 22. Thus both a multiplexing and demultiplexing function are possible between these two optical fibers which we optically coupled.

Figure 3 shows the action of the optical component 10 on information from another channel emerging from the optical fiber 20 upon reflection from the spherical surface 18 and the holographic layer 30. This information is from a source having a different wavelength than that shown in Figure 2 and is shown generally as a wave front 25. It can be seen that the information at this wavelength is directed into the end of the optical fiber 26. Also, the output from the optical fiber 26 at this wavelength is directed into the end of the optical fiber 20 when the optical component 10 is used in a reverse way.

The optical component 10 can, in like manner, direct information carried along the optical fiber 20 into the other optical fibers, 24 and 28, in a similar way. Therefore, the optical component 10 operates such that predetermined portions of any output from any fiber is selectively directed by the component 10 into the ends of various combinations of other optical fibers in accordance with predesignated wavelengths associated with each combination.

This ability results from both the characteristic of the spherical surface 18 and the characteristics of the holographic layer or layers 30. To understand the optical action of the component 10, it should first be recognized that the spherical surface 18, acting as a reflective surface, images the end of the optical fiber 20 back on itself in the case where light is emerging from that fiber. Light emerging from the optical fiber 22 is, as a result of the spherical surface 18, focused into the end of the optical fiber 26. Likewise, light emerging from the optical fiber 24 is focused by the spherical surface 18 alone into the end of the optical fiber 28 and vice versa. This action is a consequence of the spherical surface geometry and the location of the fibers with respect to its center of curvature. Thus, the spherical surface 18 acting as a reflector does much of the directing of the various wave fronts emerging from the various fibers but does not quite do enough to bring about the desired result. The remainder of the directing required is provided by the holographic layer 30 and this provides the final directions for the wave fronts 23 and 25 shown illustated in Figures 2 and 3. The reason why the holographic layer 30 operates in this manner is because it is a reflection type hologram which has the property of, after construction and subsequent illumination by one of the wave fronts used in constructing it, recreating in reconstruction the other wave front. The manner in which this property is exploited for the purposes at hand will best be understood by now taking up the method by which these properties are formed in the holographic layer 30.

The general method for providing the holographic layer 30 with its necessary characteristic is to form therein by an interferometric procedure index of refraction variations that are suitably arranged so that, upon reconstruction of the hologram contained in the layer 30 by any one of the sources emerging from any of the fibers, the outputs of each optical fiber is redirected in a preferred way. To properly form these index variations, which are not shown because of their small size, the material comprising the holographic layer 30 is required to have sufficient sensitivity within the spectral regions of interest, i.e., it must be a photosensitive medium of suitable speed. Also the material must be of sufficient thickness, 10 to 100 micrometers, so as to achieve a high diffraction efficiency and to provide a bandwidth of sufficient breadth for proper operation. In addition, the material must have a high resolution in order to record the high density of optical fringes necessary for practical operation. Materials suitable for this purpose are well known and may comprise developable photopolymers, a dichromated gelatin coating, or a photoresist film.

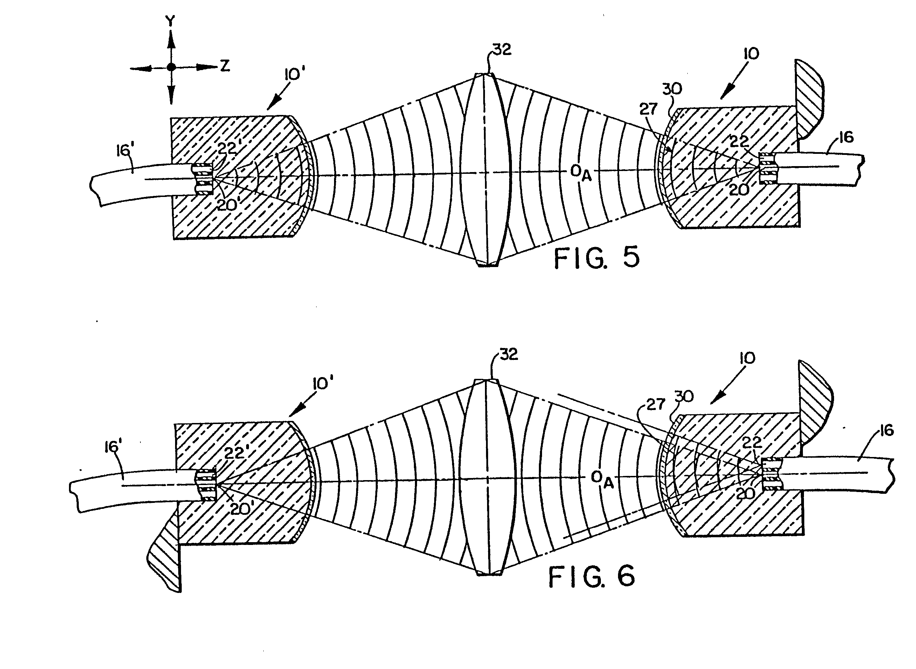

Referring now to Figure 5, there is shown an arrangement by which the index of refraction variations are formed in the holographic layer 30. As seen in Figure 5, the optical component 10 along with the fiber cable 16 are positioned along the optical axis, OA. In front of the optical component 10, there is provided a lens 32 and to the left of the lens 32 there is provided a component 10' and cable 16' which are identical to the optical component 10 and cable 16. The optical component 10' is also located on the optical axis, OA, and its spacing from the optical component 10 in combination with the characteristics of the lens 32, along with the spacing of the optical component 10 from the lens 32, are such that coherent light emerging from the optical fiber 20 can be exactly directed into its counter part 20' in the optical component 10'. To achieve this precisely, the optical component 10' is precisely moved along three axes through the use of a micromanipulator while simultaneously providing an output of known intensity from the optical fiber 20 (generally the beam 27) and monitoring the input to the optical fiber 20'. Optimum alignment is achieved that is, the optical fiber 20' is at the conjugate of the optical fiber 20, when the output from the optical fiber 20 as received along the optical fiber 20' is at a maximum. The underlying reason for this arrangement is to expose the holographic layer 30 from opposite sides thereof in a manner to be described so that it operates as a reflection hologram.

With the optical component 10' properly aligned with respect to the optical component 10, the optical component 10' is then fixed in place as shown in Figure 6. The holographic layer 30 is then formed by exposure from both sides thereof for a period of time to preferably give maximum diffraction efficiency while keeping the optical path lengths involved equal so that the result is a high degree of coherence between the two exposing beams (originating in a single laser source) during exposure thus resulting in a high modulation of the interference fringes. Also, it is necessary to maintain the state of polarization from the exposing beams to be the same, or nearly so, to maximize diffraction efficiency of the holographic layer 30. However, in the operation of the optical component 10 maintenance of the state of polarizations emerging from the various optical fibers, 20 through 28, is not necessary.

Referring now to Figure 6, exposure of the holographic layer 30 takes place in the following way. First of all the combination of fibers operating at a predesignated frequency along which it is desired to direct information from one to the other is selected. Thus in Figure 6, if it is desired to couple the optical fiber 20 and the optical fiber 22 to operate at a preassigned wavelength such that one directs light emerging from either one at that frequency into the other, the following is done. First a beam of coherent light is sent out of the optical fiber 10' which is thereafter focused in reverse onto the holographic layer 30 from the front side thereof as though it emerged from the optical fiber 20 of the optical component 10 since the optical fibers 20 and 20' are imaged one into the other. Simultaneously therewith, light at the same wavelength is directed onto the rear surface of the holographic layer 30 from the optical fiber 22 so as to form an interference pattern which is recorded in the holographic layer 30 as a pattern of index of refraction variations. Thus, when the selected wavelength of light emerges from either the optical fiber 20 or the optical fiber 22, it is automatically directed by the combination of the spherical surface 18 and the holographic layer 30 into the fiber desired. This process is carried out for various combinations of the optical fibers 20 through 28 on the basis of preassigned wavelengths associated with the combinations chosen. After exposure, the holographic layer 30 is processed in well-known ways for maximum efficiency although the amount of the signal available from any fiber for coupling may be partially directed into another fiber or fibers also through exposure control and processing.

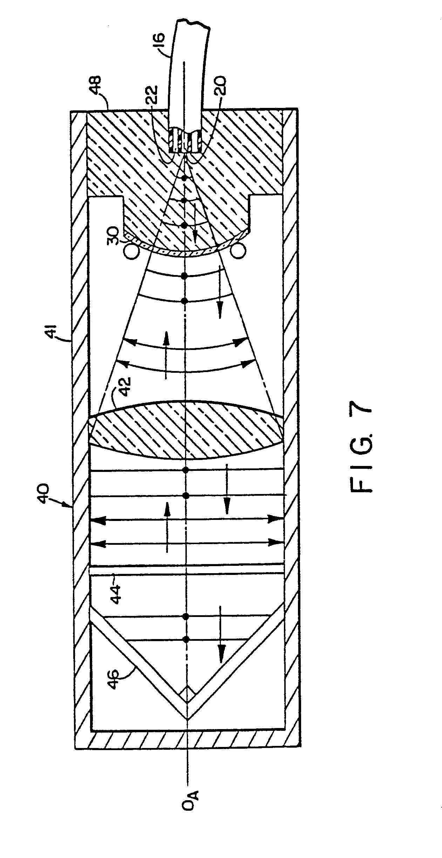

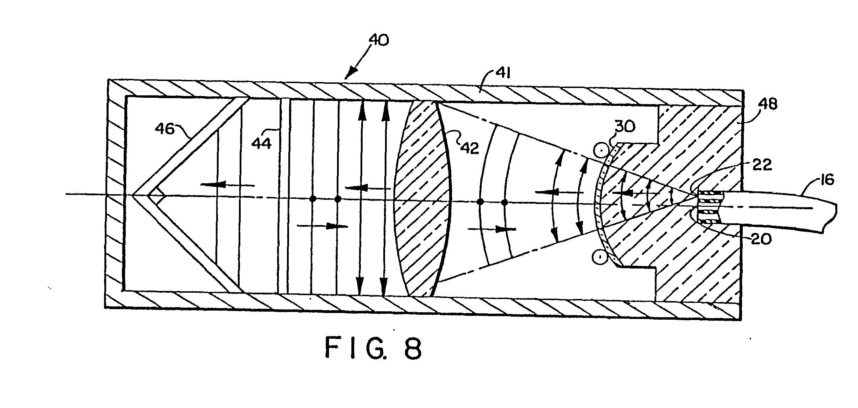

Another method by which the necessary index of refraction variations can be formed in the holographic layer 30 is shown with reference to Figures 7 and 8. As shown in those figures, there is provided a fixture 40 comprising an openended housing 41 into the end of which a slightly modified version of the optical component 10, designated at 48, precisely fits. Forward of the optical component 48 there is provided a collimating lens 42 of conventional design and to the left of the collimating lens 42 there is provided a quarter-wave plate 44 of conventional design. To the left of the quarter-wave plate 44, there is a non-depolarizing retroreflector 46. To make the exposure of the holographic layer 30 to couple a desired combination of fibers one to the other, operating at a preassigned wavelength, the apparatus 40 is used in the following way. First of all, the illumination source emerging from the central optical fiber 20 is polarized so that its azimuth of polarization is into the paper as represented by the dots. The wave front emerging at this polarization azimuth from the optical component 48 is then collimated by the lens 42 so that it emerges therefrom as a plane wave front at the designated polarization azimuth. This plane wave front, which is again represented by the dots, passes through the quarter-wave plate 44 and thereafter is retroreflected from the retroreflector 46 back out through the quarter-wave plate 44, emerging therefrom as a plane wave front whose azimuth of polarization has been rotated through 90-degrees as indicated by the vertical arrowheads. This plane wave front then is focussed by the collimating lens 42 so that it strikes the holographic layer 30 from its outside surface as though it emerged from the end of the optical fiber 20 but now with a polarization azimuth which is 90-degrees away from its original. At the same time, the other chosen optical fiber of the combination, as for example that designated at 22 in Figure 8, has emerging from it a wave front operating at the preassigned wavelength but with an azimuth of polarization that is identical to the polarization azimuth of the wave front striking the holographic layer 30 from the optical fiber 20 but from the opposite direction, i.e., the retroreflected wave front. Thus, these two wave fronts, since their polarization azimuth's are identical, form the necessary interference pattern which is recorded in the holographic layer 30 which upon subsequent reconstruction will couple this particular combination of fibers one to the other. It will be noted that, although the wave front emerging from the optical component 48 from the optical fiber 22 goes through a similar azimuth rotation as a result of passing through the various optical elements in the apparatus 40, this does not make any difference since its rotated azimuth of polarization will not interfere with anything emerging from the optical fiber 20 that is polarized at right angles to it.

In practicing this invention, it is important to space and orient the optical fiber ends so that light emerging from them and striking the holographic layer used, of whatever geometry, overlaps sufficiently to keep the diffraction efficiency of the holographic layer high.

Additionally, where purely broadband coupling arrangements are required, the holographic medium layer is preferably thin having large index variations and is exposed at any reasonable wavelength within the band. For wavelength division multiplexing applications, the holographic medium layer is preferably thick having small index variations and is exposed at the wavelength at which it is used. Moreover, in some applications it will be recognized that the fill surface of the holographic layer should be blackened to prevent extraneous reflections at its interface with air.

It will be obvious to those skilled in the art that other changes may be made in the above-described embodiments and methods without departing from the scope of the invention. For example, one holographic layer may be used with the index variations required for either coupling or multiplexing purposes superimposed upon one another through separate exposures at the wavelengths of interest or several, thin or thick layers can be used, depending on the application, with each layer exposed separately at different wavelengths. Therefore, it is intended that all matter contained in the above description or shown in the accompanying drawings shall be interpreted as illustrative and not in a limiting sense.

**Claims**

1. Apparatus for optically coupling optical fibers, said apparatus comprising:

an integrally formed optically transparent bulk element (10) having first and second ends spaced apart with respect to one another, said first end having a recess (14) formed therein adapted to facilitate receiving and supporting optical fibers;

a plurality of optical fibers (20—28) fixedly mounted within the recess so that said optical fibers are all adjacent one another and have their ends facing said second end of said element, wherein each optical fiber can carry at least one information signal in the form of a modulated electromagnetic wave of preassigned wavelength, and a reflection volume hologram (30) overlying said second end of said element, and having formed therein, in situ and after said plurality of optical fibers had been fixed in place, an interference pattern structured to receive information signals emitted from at least one combination of said optical fibers and to direct selectively by reflection predetermined portions of each signal so received into at least one another combination of said optical fibers in accordance with predesignated wavelengths and positions associated with each optical fiber of each combination.

2. The apparatus of Claim 1 wherein said element is formed of an optical plastic and said second end thereof is partially totally internally reflecting with respect to at least part of the information signals emanating from the ends of said optical fibers.

3. The apparatus of Claim 2 wherein said second end (18) of said element is spherical and said plurality of optical fibers are proximate the center of curvature thereof.

4. A method for optically coupling optical fibers, said method comprising the steps of:

integrally forming an optically transparent bulk element having first and second ends spaced apart with respect to one another, said first end having a recess formed therein adapted to facilitate receiving and supporting optical fibers;

fixedly mounting a plurality of optical fibers within the recess so that said optical fibers are all adjacent one another and have their ends facing said second end of said element, wherein each optical fiber can carry at least one information signal in the form of a modulated electromagnetic wave of preassigned wavelength; and forming a reflection volume hologram in situ overlying said second end of said element after said optical fibers are fixedly mounted in place in said element, said reflection volume hologram facing said first end of said element and having formed therein an interference pattern structured to receive information signals emitted from at least one combination of said optical fibers and to direct selectively by reflection predetermined portions of each signal so received into at least one other combination of said optical fibers in accordance with predesignated wavelengths and positions associated with each optical fiber of each combination.

**Patentansprüche**

1. Vorrichtung zur optischen Kopplung optischer Fasern, welche folgende Teile umfaßt:

ein integral geformtes optisch transparentes Kopfstück (10), welches erste und zweite im Abstand zueinander angeordnete Enden aufweist, wobei das erste Ende eine Ausnehmung (14) aufweist, um optische Fasern aufzunehmen und zu haltern;

eine Mehrzahl optischer Fasern (20 bis 28), die in der Ausnehmung so fixiert sind, daß die optischen Fasern sämtlich benachbart zueinander liegen und mit ihren Enden dem zweiten Ende des Kopfstückes zugewandt sind, und wobei jede optische Faser wenigstens ein Informationssignal in Form einer elektromagnetischen Welle vorgebenen Wellenlänge führen kann und ein Reflexionsvolumen-Hologramm (30) über dem zweiten Ende des Kopfstückes liegt, auf dem in situ und nach Festlegung der optischen Fasern ein Interferenzmuster aufgetragen wird, um Informationssignale, die von wenigstens einer Kombination der optischen Fasern emittiert wurden, selektiv durch Reflexion vorbestimmter Teile eines jeden so empfangenen Signals in wenigstens eine weitere Kombination der optischen Fasern gemäß vorgegebenen Wellenlängen und Positionen, die jeder optischen Faser jeder Kombination zugeordnet sind, zu richten.

2. Vorrichtung nach Anspruch 1, bei welcher das Kopfstück aus einem optischen Plastikmaterial hergestellt ist, und das zweite Ende hiervon innen teilweise total reflektierend für wenigstens einen Teil der Informationssignale ist, die aus den Enden der optischen Fasern austreten.

3. Vorrichtung nach Anspruch 2, bei welcher das zweite Ende (18) des Kopfstückes sphärisch ausgebildet ist und die Mehrzahl der optischen Fasern in der Nähe des Krümmungsmittelpunktes hiervon liegt.

4. Verfahren zur optischen Kopplung optischer Fasern, welches die folgenden Schritte umfaßt:

es wird integral ein optisch transparentes Kopfstück hergestellt, welches erste und zweite im Abstand zueinander liegende Enden aufweist und das erste Ende mit einer Ausnehmung ausgestattet ist, die optische Fasern aufnimmt und trägt;

es werden mehrere optische Fasern innerhalb der Ausnehmung so fixiert, daß die optischen Fasern sämtlich benachbart zueinander liegen und mit ihren Enden dem zweiten Ende des Kopfstückes zugewandt sind;

wobei jede optische Faser wenigstens ein Informationssignal in Form einer modulierten elektromagnetischen Welle vorbestimmter Wellenlänge führen kann;

es wird ein Reflexionsvolumen-Hologramm in situ über das zweite Ende des Kopfstückes gelegt, nachdem die optischen Fasern fest an Ort und Stelle im Kopfstück festgelegt sind, wobei das Reflexionsvolumen-Hologramm dem ersten Ende des Kopfstückes zugewandt ist und ein Interferenzmuster trägt, welches so strukturiert ist, daß es Informationssignale, die von wenigstens einer Kombination der optischen Fasern emittiert werden, selektiv durch Reflexion vorbestimmter Teile eines jeden so empfangenen Signals in wenigstens eine weitere Kombination der optischen Fasern gemäß vorbestimmten Wellenlängen und Positionen richtet, die jeder optischen Faser jeder Kombination zugeordnet sind.

**Revendications**

1. Dispositif pour coupler optiquement des fibres optiques, ledit dispositif comprenant:

un élément massif optiquement transparent formé d'une seule pièce (10) ayant des première et seconde extrémités espacées l'une de l'autre, ladite première extrémité ayant une cavité (14) formée au dedans adaptée pour faciliter la réception et le support de fibres optiques; un ensemble de fibres optiques (20—28) montées de façon fixe à l'intérieur de la cavité de sorte que lesdites fibres optiques sont toutes adjacentes l'une à l'autre et ont leurs extrémités orientées face à ladite seconde extrémité dudit élément, dans lequel chaque fibre optique peut acheminer au moins un signal d'information sous la forme d'une onde électromagnétique modulée de longueur d'onde attribuée au préalable, et un hologramme de volume à réflexion (30) recouvrant ladite seconde extrémité dudit élément, et dans lequel a été formée, in situ et après que ledit ensemble de fibres optiques ait été fixé en place, une image par interférence structurée pour recevoir des signaux d'information émis à partir d'au moins une combinaison desdites fibres optiques et pour diriger de façon sélective par réflexion des parties prédéterminées de chaque signal ainsi reçu en au moins une autre combinaison desdites fibres optiques selon des longueurs d'onde désignées au préalable et des positions associées à chaque fibre optique de chaque combinaison.

2. Dispositif selon la revendication 1 dans lequel ledit élément est formé d'un plastique pour optique et dont ladite seconde extrémité est partiellement réfléchissante entièrement à l'intérieur par rapport au moins à une partie des signaux d'information provenant des extrémités desdites fibres optiques.

3. Dispositif selon la revendication 2 dans lequel ladite seconde extrémité (18) dudit élément est sphérique et ledit ensemble de fibres optiques est proche du centre de sa courbure.

4. Procédé pour coupler optiquement des fibres optiques, ledit procédé comprenant les étapes de:

formation d'une seule pièce d'un élément massif optiquement transparent ayant des première et seconde extrémités espacées l'une de l'autre, ladite première extrémité ayant une cavité formée au-dedans adaptée pour faciliter la réception et le support des fibres optiques; de montage de façon fixe d'un ensemble de fibres optiques à l'intérieur de la cavité de sorte que lesdites fibres optiques sont toutes adjacentes l'une à l'autre et ont leurs extrémités orientées face à ladite seconde extrémité dudit élément, dans lequel chaque fibre optique peut acheminer au moins un signal d'information sous la forme d'une onde électromagnétique modulée de longueur d'onde attribuée au préalable; et de formation d'un hologramme de volume à réflexion in situ recouvrant ladite seconde extrémité dudit élément après que lesdites fibres optiques aient été montées fixement en place dans ledit élément, ledit hologramme de volume à réflexion étant orienté face à ladite première extrémité dudit élément et ayant formée au dedans une image par interférence structurée pour recevoir des signaux d'information émis à partir d'au moins une combinaison desdites fibres optiques et pour diriger de façon sélective par réflexion des parties prédéterminées de chaque signal ainsi reçu en au moins une autre combinaison desdites fibres optiques selon des longueurs d'onde désignées au préalable et des positions associées à chaque fibre optique de chaque combinaison.

FIG. 1

FIG. 1A

FIG. 2

FIG. 3

FIG. 4

FIG. 5

FIG. 6

EP 0 120 366 B1

FIG. 7

FIG. 8